# FASCICULE DE BREVET EUROPEEN

(11) **EP 0 448 446 B1**
(45) Date de publication et mention de la délivrance du brevet: **22.09.1993**
(21) Numéro de dépôt: 91400676.2
(22) Date de dépôt: 12.03.1991
(51) Int. Cl.: B60N 2/22, F16H 1/32

(54) **Articulation continue sans satellite à rattrapage de jeu**
Planetenfreies, kontinuerliches Gelenk mit Spielausgleich
Planet free continuous articulation with compensation for play

(30) Priorité: 20.03.1990 FR 9003529
(43) Date de publication de la demande: 25.09.1991
(73) Titulaire: BERTRAND FAURE AUTOMOBILE, F-78391 Bois d'Arcy Cédex (FR)
(72) Inventeur: Baloche, François, F-61100 Flers (FR)
(74) Mandataire: Madeuf, Claude Alexandre Jean

(56) Documents cités:
- EP-A- 0 274 331
- EP-A- 0 406 089
- FR-A- 2 528 678
- GB-A- 2 073 311
- US-A- 3 562 851

## Description

La présente invention a pour objet une articulation continue sans satellite destinée à être montée sur des sièges de véhicule afin que le dossier de chaque siège soit réglable en inclinaison. De plus, cette articulation comporte un rattrapage de jeu éliminant également les points durs inhérents du fait des dentures coopérantes dont les cotes de tolérance, malgré le soin apporté à la réalisation des dentures, présentent des imperfections nuisibles, d'une part, au bon fonctionnement de l'articulation et, d'autre part, au confort du passager utilisant le siège considéré.

Il y a également lieu de signaler que ces articulations continues présentent, d'une part, une grande résistance augmentant donc la sécurité du passager au moment d'un choc et, d'autre part, d'une fabrication simple donc peu coûteuse répondant ainsi à la demande des constructeurs pour des véhicules de bas de gamme ou pour des petits véhicules de ville.

On connaît depuis longtemps des articulations continues sans satellite permettant un positionnement aisé du dossier par rapport à l'assise d'un siège mais ces articulations continues sans satellite présentent toutes l'inconvénient d'additionner les jeux dus aux tolérances de fabrication, ce qui fait que le dossier est, d'une part, difficile à régler en inclinaison et, d'autre part, peut présenter un phénomène d'instabilité désagréable pour le passager assis sur le siège.

La présente invention remédie à cet inconvénient en créant une articulation continue sans satellite avec rattrapage de jeux.

Conformément à l'invention, l'articulation continue sans satellite comportant un dispositif de rattrapage des jeux dans laquelle le flasque mobile solidaire du dossier du siège présente dans sa partie centrale un embouti creux dont la bordure principale comporte une denture circulaire destinée à coopérer avec la denture de plus petit diamètre portée par la partie extérieure de la zone circulaire centrale du flasque fixe solidaire de l'assise, cette zone centrale du flasque fixe étant percée d'une ouverture circulaire, est caractérisée en ce que dans l'ouverture est placée autour d'un axe à collet central une cuvette comportant un roulement à billes maintenu par une cage, puis est disposée à l'intérieur de la cuvette concentriquement à l'axe, d'une part, deux demi-cames séparées à leurs extrémités supérieures par un ressort spiral arqué, tandis que leurs parties inférieures délimitent un espace dans lequel peut se déplacer un doigt solidaire de l'axe central contenant un arbre de commande de l'articulation, cet ensemble permettant lorsqu'il est monté de passer les points durs par déplacement des demi-cames l'une vers l'autre en comprimant le ressort sous l'effet de la poussée par le doigt d'une des demi-cames, afin de réduire l'excentricité α de la denture du flasque fixe par rapport à la denture du flasque mobile, puis finalement, un boîtier solidaire du flasque mobile maintient l'ensemble des organes précités, tandis qu'un guide inférieur solidaire du flasque fixe et évidé maintient la partie basse du boîtier.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une vue de face de l'articulation prête au montage sur un siège.

La fig. 2 est une coupe prise suivant la ligne II-II de la fig. 1.

La fig. 3 est une vue de face en partie en coupe suivant la ligne III-III de la fig. 2.

La fig. 4 est une coupe suivant la ligne IV-IV de la fig. 3.

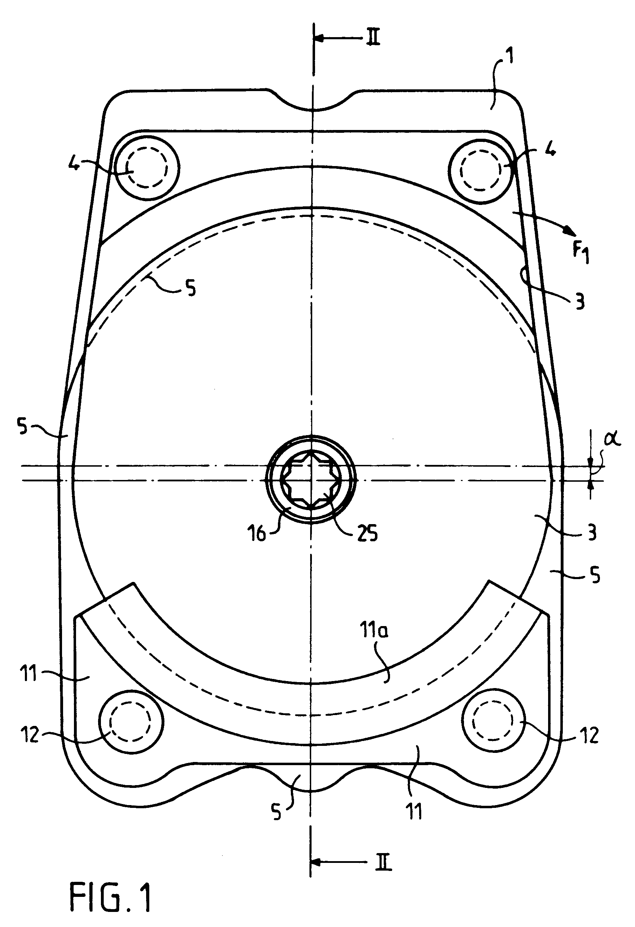

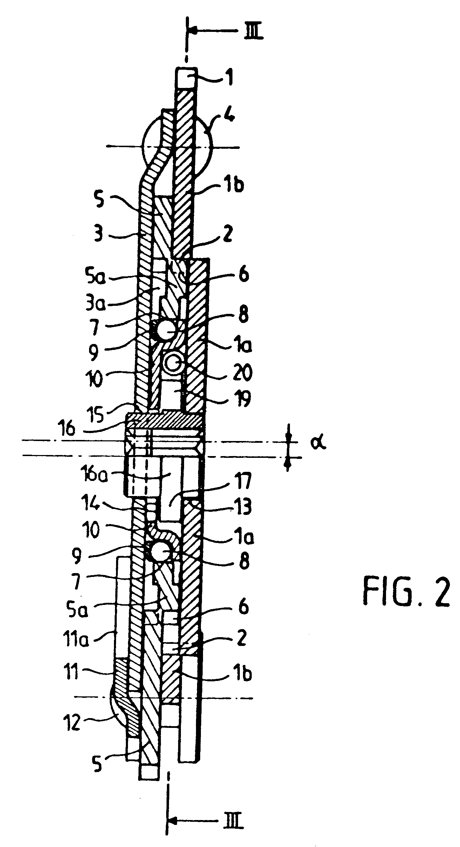

A la fig. 1, on a représenté le flasque mobile 1 qui se fixe sur la partie inférieure de l'armature du dossier du siège par tout moyen convenable. En coupe, ce flasque mobile 1 présente une partie centrale 1a décalée en arrière de la bordure périphérique 1b de façon que, sur la face intérieure de la bordure périphérique 1b, apparaisse la denture circulaire 2. Cette denture circulaire est le plus souvent réalisée par découpage fin, c'est-à-dire par emboutissage d'une plaque de tôle plane réalisant après cette phase de travail la partie centrale 1a circulaire et la bordure périphérique 1b. La face avant du flasque mobile 1 porte à sa partie supérieure un boîtier 3 qui est fixé sur la partie supérieure de la bordure périphérique 1b par des rivets 4. Comme on peut le voir à la fig. 2, le boîtier 3 est déformé de façon à laisser un espace libre suffisant entre le flasque mobile 1 et sa face arrière 3a. Cet espace est occupé par le flasque fixe 5 solidaire de l'armature de l'assise du siège et qui comporte dans sa zone circulaire centrale 5a une denture extérieure 6 destinée à coopérer avec la denture 2 du flasque mobile 1. De plus, au centre du flasque fixe 5, est prévue une ouverture circulaire 7 destinée à contenir un roulement à billes 8 maintenu par une cage 9 et une cuvette 10.

On trouve à la partie inférieure du flasque fixe 5, solidaire de l'assise du siège, un guide inférieur 11 conformé qui est rendu solidaire de ce flasque fixe 5 par des rivets 12. Le guide inférieur 11 maintient et guide la partie inférieure du bottier 3 (voir fig. 1) et présente une forme supérieure circulaire évidée 11a.

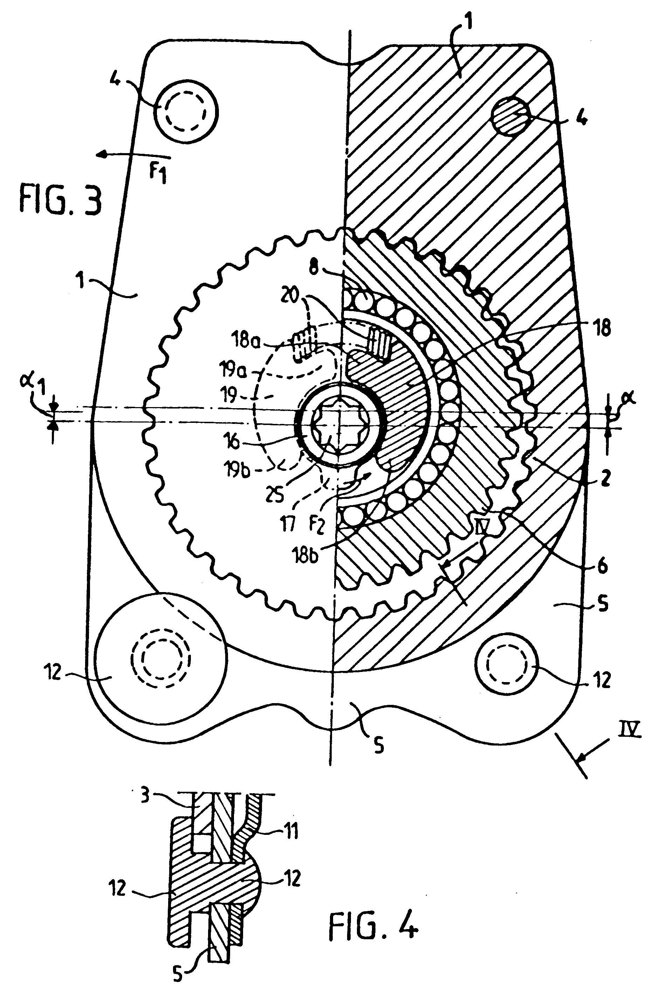

Finalement, le flasque mobile 1 est percé d'un trou formant palier 13 tandis que la cuvette 10 est percée d'un trou 14 de grand diamètre et que le boîtier 3 est également percé d'un trou 15, ces trous étant sensiblement alignés pour permettre le passage d'un axe central 16 comportant dans sa zone centrale un collet 16a qui présente un doigt 17. Le trou central 14 de la cuvette 10 permet le passage du collet 16a. La face avant de la cuvette 10 contient deux pièces 18, 19, formant chacune une demi-came, qui présentent à leur partie supérieure des découpes 18a, 19a pour loger un ressort arqué 20, tandis que les talons 18b, 19b des demi-cames 18, 19 sont arrondis et sont situés chacun à une certaine distance du doigt 17. A la fig. 3, le ressort 20 est représenté comprimé.

Normalement, l'excentricité de la denture fixe 6 par rapport à la denture mobile 2 est donnée par la distance (voir fig. 1, 2 et 3).

Au montage, l'espace central du flasque mobile 1 reçoit la cuvette 10 maintenant le roulement à billes 8 et sa cage 9 ainsi que les deux demi-cames 18, 19 et le ressort 20. L'axe central 16 est placé de façon que le collet 16a soit situé dans le trou 14 de la cuvette 10 et la position du doigt 17 est telle qu'à ce moment l'excentricité α est réduite, c'est-à-dire que la distance α₁ est inférieure à la distance α (voir fig. 3) ; les demi-cames 18, 19 sont donc repoussées l'une vers l'autre en comprimant le ressort 20, ce qui permet de mettre en place le flasque fixe 5 dont la denture fixe 6 pénètre aisément dans la denture 2 du flasque mobile. La denture 6 a un diamètre plus petit que le diamètre de la denture 2 du flasque mobile 1 (voir fig. 3), mais est d'un module identique.

On repousse alors l'axe central 16 dans la position de la fig. 2 et le collet 16a est décalé, les deux demi-cames 18, 19 prenant alors leur position normale (voir fig. 2). Le ressort 20 se détend. L'excentricité est maximum c'est-à-dire normale et égale à α .

Une fois les flasques fixe 5 et mobile 1 montés, on les maintient l'un sur l'autre en mettant en place d'abord le boîtier 3 sur le flasque mobile 1 puis le guide inférieur 11 sur le flasque fixe 5.

L'axe central 16 est creux et cannelé (référence 25) comme cela est représenté au dessin, il est possible de mettre en place un arbre à section polygonale dans le trou 25 de l'axe 16 et de commander ainsi l'articulation unique ou les deux articulations placées de part et d'autre du siège soit manuellement, soit par un élément moteur (moteur électrique ou autre).

Au cours de l'entraînement en rotation de l'arbre placé dans le trou 25 de l'axe central 16, on crée un déplacement circulaire de la denture fixe 6 du flasque fixe 5 et il se produit, de ce fait, un déplacement angulaire du flasque mobile 1 du fait de l'entraînement des dentures 6 et 2. Le flasque mobile 1 se déplace, par exemple, dans le sens de la flèche F1 (fig. 3), mais du fait des jeux de tolérances de fabrication, il arrive que ce mouvement provoque rapidement un point dur, ce qui fait que la rotation de l'axe central 16 tourne plus difficilement. Le doigt 17 se déplace alors vers la droite (flèche F2, fig. 3), pousse la demi-came 18 en comprimant le ressort 20, l'extrémité terminale haute ou talon 18a de la demi-came 18 rencontre la partie terminale haute ou talon 19a de la demi-came 19 provoquant ainsi une légère modification de l'excentration primaire, l'excentricité α est amenuisée en α₁, ce qui fait apparaître, par recul de la denture fixe 6 du flasque fixe 5, un degagement des dentures 6 et 2 fixe et mobile des flasques fixe 5 et mobile 1. On peut donc passer aisément le passage du point dur considéré qui, dès que la pression diminue provoque, sous l'impulsion du ressort 20 qui se débande légèrement, la remise en place des deux demi-cames 18, 19 et les organes reprennent alors leur place representée à la fig. 3.

Le doigt 17 est de nouveau centré et le ressort 20 est légèrement décomprimé. Ce mouvement provoque également le retour à l'excentricité normale α telle que représentée au dessin.

On peut ainsi compenser tous les jeux provoqués par les tolérances de fabrication et même l'usure de dentures aussi bien la denture 6 du flasque fixe 5 que la denture 2 du flasque mobile 1. La rotation de l'articulation est donc continue sans que l'utilisateur s'aperçoive des points durs.

Finalement, il y a lieu de noter que le flasque mobile 1 se déplace suivant un mouvement oscillant du fait de l'excentration de la came constituée par les demi-cames 18, 19 qui agissent sur le flasque mobile 1 par rapport au flasque fixe. En conséquence, le dossier du siège considéré effectue un mouvement de montée et de descente simultanément de va-et-vient, d'avant en arrière pendant le réglage de l'inclinaison du dossier.

## Revendications

1. Articulation continue sans satellite comportant un dispositif de rattrapage des jeux dans laquelle le flasque mobile (1) solidaire du dossier du siège présente dans sa partie centrale (1a) un embouti creux dont la bordure principale (1b) comporte une denture circulaire (2) destinée à coopérer avec la denture (6) de plus petit diamètre portée par la partie extérieure de la zone circulaire centrale (5a) du flasque fixe (5) solidaire de l'assise, cette zone centrale du flasque fixe (5) étant percée d'une ouverture circulaire (7), dans laquelle est placée autour d'un axe (16) à collet central (16a) une cuvette (10) puis est disposée à l'intérieur de cette cuvette (10) concentriquement à l'axe (16), d'une part, deux demi-cames (18, 19) séparées à leurs extrémités supérieures (18a - 19a) par un ressort spiral arqué (20), tandis que leurs parties inférieures (18b, 19b) délimitent un espace dans lequel peut se déplacer un doigt (17) solidaire de l'axe central (16) contenant un arbre de commande de l'articulation, caractérisé en ce que la cuvette (10) contient un roulement à billes (8) maintenu par une cage (9), cet ensemble permettant lorsqu'il est monté de passer les points durs de résistance par déplacement des demi-cames (18, 19) l'une vers l'autre en comprimant le ressort (20) sous l'effet de la poussée par le doigt (17) d'une des demi-cames (18, 19), afin de réduire l'excentricité (α) de la denture (6) du flasque fixe (5) par rapport a la denture (2) du flasque mobile (1), puis finalement, un boîtier (3) solidaire du flasque mobile (1) maintient l'ensemble des organes précités, tandis qu'un guide inférieur (11) solidaire du flasque fixe (5) et évidé [en (11a)] maintient la partie basse du boîtier (3).

2. Articulation continue sans satellite suivant la revendication 1, caractérisée en ce que l'axe central (16) est cannelé pour recevoir un arbre de commande également cannelé permettant la liaison des deux articulations assurant conjointement le réglage en inclinaison du dossier du siège considéré.

## Patentansprüche

1. Planetenfreies kontinuierliches Gelenk mit Spielausgleich, in dem ein mit einer Sitzrückenlehne verbundener Drehschild (1) in seinem Zentralbereich (1a) eine Vertiefung aufweist und im Randbereich (1b) eine Innenverzahnung (2) bildet, die mit einer Verzahnung (6) wesentlich geringeren Durchmessers des kreisförmigen Zentralbereiches (5a) eines am Sitz befestigten Festschildes (5) zusammenwirkt, welcher Festschild-Zentralbereich durch eine kreisförmige Öffnung (7) durchbrochen ist, in der um eine mit einem Bund (16a) versehene Zentralachse (16) ein Deckel (10) und außerdem im Inneren des Deckels konzentrisch zur Achse (16) zwei an ihren oberen Enden (18a, 19a) durch eine gebogene Spiralfeder (20) getrennte Halbnocken (18,19) angeordnet sind, deren untere Bereiche (18b,19b) einen Spalt abgrenzen, in dem ein mit der Zentralachse (16) verbundener Daumen (17) verschiebbar angeordnet ist, der einen Verschwenkungs-Steuerarm enthält, dadurch **gekennzeichnet,** daß im Deckel (10) ein Kugellager (8) mit Käfig (9) aufgenommen ist, welche Einheit es nach der Montage erlaubt, Punkte der Schwergängigkeit durch die die Feder (20) zusammendrückende Verschiebung der Halbnocken (18,19) gegeneinander als Folge eines Stoßes des Daumens (17) gegen einen der Haltenocken zu überwinden, um die Exzentrizität(α) der Verzahnung (6) des Festschildes (5) im Verhältnis zur Verzahnung (2) des Drehschildes (1) zu verringern, und daß außerdem ein mit dem Drehschild (1) verbundenes Gehäuse (3) die vorgenannten Elemente zusammenhält, während eine untere, am Festschild (5) befestigte (bei 11a) runde Führung (11) den unteren T eil des Gehäuses (3) hält.

2. Gelenk nach dem Anspruch 1, dadurch **gekennzeichnet,** daß die Zentralachse (16) mit inneren Längsnuten für die Aufnahme eines ebenfalls genuteten Steuerarmes versehen ist, der die Verbindung der beiden Gelenke, die zusammen die Einstellung des Neigungswinkels des jeweiligen Sitzes bewirken, herstellt.

## Claims

1. Planet free continuous articulation including a play compensation device, wherein the mobile flange (1) rigidly connected to the seat-back of the seat has in its central portion (1a) a hollow stamped portion the main border (1b) of which comprises a circular toothing (2) adapted for cooperating with the toothing (6) of smaller diameter carried by the outer portion of the central circular zone (5a) of the fixed flange (5) rigidly connected to the sitting portion, this central zone of the fixed flange (5) being pierced with a circular opening (7), in which there is placed, about a spindle (16) having a central collar (16a), a dish (10), then there is placed within this dish (10), concentrically to the spindle (16), on the one hand, two half-cams (18, 19) separated at their upper ends (18a - 19a) by an arcuate spiral spring (20), while their lower portions (18b, 19b) define a space in which can move a finger (17) rigidly connected to the central spindle (16) containing an articulation control shaft, characterized in that the dish (10) contains a ball bearing (8) retained by a cage (9), this assembly enabling, when mounted, passing over the resisting hard points by a displacement of the half-cams (18, 19) one toward the other while compressing the spring (20) under effect of the thrust imparted by the finger (17) of one of the half-cams (18, 19), in order to reduce the eccentricity α of the toothing (6) of the fixed flange (5) with respect to the toothing (2) of the mobile flange (1), then finally, a casing (3) rigidly connected to the mobile flange (1) maintains the aforementioned member assembly, while a lower guide (11) rigidly connected to the fixed flange (5) and recessed maintains the lower portion of the casing (3).

2. Planet free continuous articulation according to claim 1, characterized in that the central spindle (16) is fluted for receiving a control shaft which is also fluted for enabling the connection of the two articulations providing jointly for the adjustment in inclination of the seat-back of the seat in consideration.
